# EUROPEAN PATENT APPLICATION

(11) **EP 4 383 917 A1**
(43) Date of publication of application: **12.06.2024**
(21) Application number: 22852212.4
(22) Date of filing: 02.08.2022
(51) Int. Cl.: H04W 74/08

(54) **INFORMATION PROCESSING METHOD, ACCESS METHOD, APPARATUS, AND STORAGE MEDIUM**

(30) Priority: 06.08.2021 CN 202110904518
(71) Applicant: Datang Mobile Communications Equipment Co., Ltd., Beijing 100085 (CN)
(72) Inventor: FEI, Yongqiang, Beijing 100085 (CN); ZHOU, Lei, Beijing 100085 (CN)
(74) Representative: Studio Torta S.p.A.
(86) International application number: PCT/CN2022/109783
(87) International publication number: WO 2023/011500

(57) **Abstract**

The present application provides an information processing method, an access method, an apparatus and a storage medium. The method includes: receiving a physical uplink shared channel of a message A transmitted by a terminal; and determining a type of the terminal according to the physical uplink shared channel of the message A, thereby realizing the identification of the type of the terminal in a random access procedure.

## Description

This application claims priority to Chinese Patent Application No. 202110904518.8, filed to the China National Intellectual Property Administration on August 6, 2021 and entitled "ACCESS METHOD AND APPARATUS, AND STORAGE MEDIUM". The content of aforementioned application is hereby incorporated by reference in its entirety.

### TECHNICAL FIELD

The present disclosure relates to communication technologies and, in particular, to an information processing method, an access method, an apparatus and a storage medium.

### BACKGROUND

In the 5th-Generation (5th-Generation, 5G) system, with the technical evolution, a network device needs to support different types of terminals, such as terminals with different capability types or different service types. No matter which type of terminal, it is necessary to initiate random access to the network device to obtain a communication service provided by the network device.

For different types of terminals, the earlier the network device knows the type of terminals that initiate random access, the earlier it can make targeted scheduling, thereby improving the resource utilization rate. Therefore, how to realize terminal identification in a random access procedure is an urgent problem.

### SUMMARY

The present disclosure provides an information processing method, an access method, an apparatus and a storage medium, which realize the identification of a type of a terminal in a random access procedure.

In a first aspect, the present disclosure provides an information processing method which includes:
determining a first physical uplink shared channel PUSCH, where the first PUSCH is used for transmitting a message A;
transmitting the first PUSCH to a network device, where first PUSCHs corresponding to different types of terminals are different.

In an implementation, the determining the first physical uplink shared channel PUSCH includes:
determining terminal type indication information, where the terminal type indication information is used for indicating the type of the terminal;
carrying the terminal type indication information in the first physical uplink shared channel PUSCH.

In an implementation, the type of the terminal includes one or more of a RedCap low-capacity terminal type and a non-low-capacity terminal type.

In a second aspect, the present disclosure provides an information processing method which includes:
receiving a first physical uplink shared channel PUSCH transmitted by a terminal, where the first PUSCH is used for transmitting a message A;
determining a type of the terminal according to the first PUSCH.

In an implementation, the determining the type of the terminal according to the first PUSCH includes:
determining the type of the terminal according to terminal type indication information carried in the first PUSCH.

In a third aspect, the present disclosure provides an access method which includes:
receiving a physical uplink shared channel of a message A transmitted by a terminal;
determining a type of the terminal according to the physical uplink shared channel of the message A.

In an implementation, resources of physical uplink shared channel occasion of the message A corresponding to different types of terminals are different.

In an implementation, time domain resources and/or frequency domain resources of the physical uplink shared channels of the message A corresponding to different types of terminals are different.

In an implementation, resources of physical uplink shared channel occasion of the message A corresponding to different types of terminals are the same, and demodulation reference signals of the physical uplink shared channels of the message A corresponding to different types of terminals are different.

In an implementation, ports and/or sequences of demodulation reference signals of the physical uplink shared channels of the message A corresponding to different types of terminals are different.

In an implementation, the determining the type of the terminal according to the physical uplink shared channel of the message A includes:
determining the type of the terminal according to terminal type indication information in the physical uplink shared channel of the message A.

In an implementation, different types of terminals support different maximum terminal bandwidths and/or different minimum numbers of antennas.

In a fourth aspect, the present disclosure provides an access method which includes:
determining a physical uplink shared channel of a message A;
transmitting the physical uplink shared channel of the message A to a network device, where the physical uplink shared channels of the message A corresponding to different types of terminals are different.

In an implementation, resources of physical uplink shared channel occasion of the message A corresponding to different types of terminals are different.

In an implementation, time domain resources and/or frequency domain resources of the physical uplink shared channels of the message A corresponding to different types of terminals are different.

In an implementation, resources of physical uplink shared channel occasion of the message A corresponding to different types of terminals are the same, and demodulation reference signals of the physical uplink shared channels of the message A corresponding to different types of terminals are different.

In an implementation, ports and/or sequences of demodulation reference signals of the physical uplink shared channels of the message A corresponding to different types of terminals are different.

In an implementation, the physical uplink shared channel of the message A includes terminal type indication information, where the terminal type indication information is used for indicating the type of the terminal.

In an implementation, different types of terminals support different maximum terminal bandwidths and/or different minimum numbers of antennas.

In a fifth aspect, the present disclosure provides an information processing apparatus which includes a memory, a transceiver and a processor, where:
the memory is configured to store a computer program;
the transceiver is configured to receive and transmit data under control of the processor;
the processor is configured to read the computer program stored in the memory and perform the following operations:
   determining a first physical uplink shared channel PUSCH, where the first PUSCH is used for transmitting a message A;
   transmitting the first PUSCH to a network device, where first PUSCHs corresponding to different types of terminals are different.

In an implementation, the processor is configured to perform the following operations:
determining terminal type indication information, where the terminal type indication information is used for indicating the type of the terminal;
carrying the terminal type indication information in the first physical uplink shared channel PUSCH.

In an implementation, the type of the terminal includes one or more of a RedCap low-capacity terminal type and a non-low-capacity terminal type.

In a sixth aspect, the present disclosure provides an information processing apparatus which includes a memory, a transceiver and a processor, where:
the memory is configured to store a computer program;
the transceiver is configured to receive and transmit data under control of the processor;
the processor is configured to read the computer program stored in the memory and perform the following operations:
   receiving a first physical uplink shared channel PUSCH transmitted by a terminal, where the first PUSCH is used for transmitting a message A;
   determining a type of the terminal according to the first PUSCH.

In an implementation, the processor is configured to perform the following operations:
determining a type of the terminal according to terminal type indication information carried in the first PUSCH.

In a seventh aspect, the present disclosure provides an access apparatus which includes a memory, a transceiver and a processor, where:
the memory is configured to store a computer program;
the transceiver is configured to receive and transmit data under control of the processor;
the processor is configured to read the computer program stored in the memory and perform the following operations:
   receiving a physical uplink shared channel of a message A transmitted by a terminal;
   determining a type of the terminal according to the physical uplink shared channel of the message A.

In an implementation, resources of physical uplink shared channel occasion of the message A corresponding to different types of terminals are different.

In an implementation, the time domain resources and/or frequency domain resources of the physical uplink shared channels of the message A corresponding to different types of terminals are different.

In an implementation, resources of physical uplink shared channel occasion of the message A corresponding to different types of terminals are the same, and demodulation reference signals of the physical uplink shared channels of the message A corresponding to different types of terminals are different.

In an implementation, ports and/or sequences of demodulation reference signals of the physical uplink shared channels of the message A corresponding to different types of terminals are different.

In an implementation, the processor is configured to perform the following operation:
determining the type of the terminal according to terminal type indication information in the physical uplink shared channel of the message A.

In an implementation, different types of terminals support different maximum terminal bandwidths and/or different minimum numbers of antennas.

In an eighth aspect, the present disclosure provides an access apparatus which includes a memory, a transceiver and a processor, where:
the memory is configured to store a computer program;
the transceiver is configured to receive and transmit data under control of the processor;
the processor is configured to read the computer program stored in the memory and perform the following operations:
   determining a physical uplink shared channel of a message A;
   transmitting a physical uplink shared channel of the message A to a network device, where the physical uplink shared channels of the message A corresponding to different types of terminals are different.

In an implementation, resources of physical uplink shared channel occasion of the message A corresponding to different types of terminals are different.

In an implementation, time domain resources and/or frequency domain resources of the physical uplink shared channels of the message A corresponding to different types of terminals are different.

In an implementation, resources of physical uplink shared channel occasion of the message A corresponding to different types of terminals are the same, and demodulation reference signals of the physical uplink shared channels of message A corresponding to different types of terminals are different.

In an implementation, ports and/or sequences of demodulation reference signals of the physical uplink shared channels of the message A corresponding to different types of terminals are different.

In an implementation, the physical uplink shared channel of the message A includes terminal type indication information, where the terminal type indication information is used for indicating the type of the terminal.

In an implementation, different types of terminals support different maximum terminal bandwidths and/or different minimum numbers of antennas.

In a ninth aspect, the present disclosure provides an information processing apparatus which includes:
a determining module, configured to determine a first physical uplink shared channel PUSCH, where the first PUSCH is used for transmitting a message A;
a transmitting module, configured to transmit the first PUSCH to a network device, where first PUSCHs corresponding to different types of terminals are different.

In an implementation, the determining module is configured to:
determine terminal type indication information, where the terminal type indication information is used for indicating the type of the terminal;
carry the terminal type indication information in the first physical uplink shared channel PUSCH.

In an implementation, the type of the terminal includes one or more of a RedCap low-capacity terminal type and a non-low-capacity terminal type.

In a tenth aspect, the present disclosure provides an information processing apparatus which includes:
a receiving module, configured to receive a first physical uplink shared channel PUSCH transmitted by a terminal, where the first PUSCH is used for transmitting a message A;
a determining module, configured to determine a type of the terminal according to the first PUSCH.

In an implementation, the determining module is configured to:
determining the type of the terminal according to terminal type indication information carried in the first PUSCH.

In an eleventh aspect, the present disclosure provides an access apparatus which includes:
a receiving unit, configured to receive a physical uplink shared channel of a message A transmitted by a terminal;
a processing unit, configured to determine a type of the terminal according to the physical uplink shared channel of the message A.

In an implementation, resources of physical uplink shared channel occasion of the message A corresponding to different types of terminals are different.

In an implementation, time domain resources and/or frequency domain resources of the physical uplink shared channels of the message A corresponding to different types of terminals are different.

In an implementation, resources of physical uplink shared channel occasion of the message A corresponding to different types of terminals are the same, and demodulation reference signals of the physical uplink shared channels of the message A corresponding to different types of terminals are different.

In an implementation, the ports and/or sequences of demodulation reference signals of the physical uplink shared channels of the message A corresponding to different types of terminals are different.

In an implementation, the processing unit is configured to:
determine the type of the terminal according to terminal type indication information in the physical uplink shared channel of the message A.

In an implementation, different types of terminals support different maximum terminal bandwidths and/or different minimum numbers of antennas.

In a twelfth aspect, the present disclosure provides an access apparatus, including:
a processing unit, configured to determine a physical uplink shared channel of a message A;
a transmitting unit, configured to transmit a physical uplink shared channel of the message A to a network device, where the physical uplink shared channels of the message A corresponding to different types of terminals are different.

In an implementation, resources of physical uplink shared channel occasion of the message A corresponding to different types of terminals are different.

In an implementation, time domain resources and/or frequency domain resources of the physical uplink shared channels of the message A corresponding to different types of terminals are different.

In an implementation, resources of physical uplink shared channel occasion of the message A corresponding to different types of terminals are the same, and demodulation reference signals of the physical uplink shared channels of the message A corresponding to different types of terminals are different.

In an implementation, ports and/or sequences of demodulation reference signals of the physical uplink shared channels of the message A corresponding to different types of terminals are different.

In an implementation, the physical uplink shared channel of the message A includes terminal type indication information, where the terminal type indication information is used for indicating the type of the terminal.

In an implementation, different types of terminals support different maximum terminal bandwidths and/or different minimum numbers of antennas.

In a thirteenth aspect, the present disclosure provides a computer-readable storage medium, where the computer-readable storage medium stores a computer program for causing a computer to execute the method described in any one of the first to fourth aspects.

In a fourteenth aspect, the present disclosure provides a computer program product including a computer program, when the computer program is executed by the processor, the method described in any one of the first to fourth aspects is implemented.

The present disclosure provides the information processing method, the access method, the apparatus and the storage medium. In the method, after receiving a physical uplink shared channel of a message A transmitted by a terminal, a network device determines a type of the terminal according to the physical uplink shared channel of the message A, thereby realizing the identification of the type of the terminal in the random access procedure.

It should be understood that, the content described in the above summary section is not intended to limit key or important features of the embodiments of the present invention, nor is it intended to limit the scope of the present invention. Other features of the present invention will be readily understood by the following description.

### BRIEF DESCRIPTION OF DRAWINGS

FIG. 1 is a schematic diagram of a 2-step RACH.
FIG. 2 is a schematic diagram of an application scenario of an access method provided by an embodiment of the present disclosure.
FIG. 3 is a schematic flowchart of an access method provided by an embodiment of the present disclosure.
FIG. 4 is a schematic diagram I of resources of ordinary UE and RedCap UE provided by an embodiment of the present disclosure.
FIG. 5 is a schematic diagram II of resources of ordinary UE and RedCap UE provided by an embodiment of the present disclosure.
FIG. 6 is a schematic diagram III of resources of ordinary UE and RedCap UE provided by an embodiment of the present disclosure.
FIG. 7 is a schematic diagram IV of resources of ordinary UE and RedCap UE provided by an embodiment of the present disclosure.
FIG. 8 is a schematic structural diagram I of an access apparatus provided by an embodiment of the present disclosure.
FIG. 9 is a schematic structural diagram II of an access apparatus provided by an embodiment of the present disclosure.
FIG. 10 is a schematic structural diagram III of an access apparatus provided by an embodiment of the present disclosure
FIG. 11 is a schematic structural diagram IV of an access apparatus provided by an embodiment of the present disclosure.

### DESCRIPTION OF EMBODIMENTS

The term "and/or" in the present disclosure describes an association relationship between associated objects, and represents that there may be three relationships. For example, A and/or B may represent three cases: A exists alone, A and B exist simultaneously, and B exists alone. The character "j" generally indicates an "or" relationship between the associated objects before and after the character. The term "a plurality of" in the embodiments of the present disclosure refers to two or more, and other quantifiers are similar thereto.

The following clearly and comprehensively describes technical solutions in the embodiments of the present disclosure with reference to the accompanying drawings in the embodiments of the present disclosure. Apparently, the described embodiments are merely a part rather than all of the embodiments of the present disclosure. Other embodiments obtained by a person of ordinary skill in the art based on the embodiments of the present disclosure without paying creative efforts shall fall within the scope of protection of the present disclosure.

The embodiments of the present disclosure provide an information processing method, an access method and apparatus, which realize the identification of a type of a terminal in a random access procedure, so that the network device can make targeted scheduling, thereby improving resource utilization of the network. Where the method and the apparatus are based on the same application concept, and principles of solving problems thereof are similar, for the embodiments of the apparatus and the method, reference can be made to each other, and for the same parts, it will not be described here again.

The technical solutions provided by the embodiments of the present disclosure may be applicable to various systems and, in particular, to a 5G system. For example, an applicable system may be a global system of mobile communication (global system of mobile communication, GSM) system, a code division multiple access (code division multiple access, CDMA) system, a wideband code division multiple access (Wideband Code Division Multiple Access, WCDMA) general packet radio service (general packet radio service, GPRS) system, a long term evolution (long term evolution, LTE) system, an LTE frequency division duplex (frequency division duplex, FDD) system, an LTE time division duplex (time division duplex, TDD) system, a long term evolution advanced (long term evolution advanced, LTE-A) system, a universal mobile telecommunication system (universal mobile telecommunication system, UMTS), a worldwide interoperability for microwave access (worldwide interoperability for microwave access, WiMAX) system, a 5G new radio (New Radio, NR) system, etc. The various systems all include a terminal device and a network device, and further include a core network part, such as an evolved packet system (Evolved Packet System, EPS), a 5G system (5GS), etc.

The terminal device involved in the embodiments of the present disclosure may be a device that provides voice and/or data connectivity to users, a handheld device with a wireless connection function, other processing devices connected to a wireless modem, or the like. In different systems, a name of a terminal device may be different. For example, in a 5G system, a terminal device can be called a user equipment (User Equipment, UE). A wireless terminal device can communicate with one or more core networks (Core Network, CN) via a radio access network (Radio Access Network, RAN). A wireless terminal device can be a mobile terminal device, such as a mobile phone (or a "cellular" phone) and a computer with a mobile terminal device, such as a portable, pocket-sized, hand-held, computer-built or vehicle-mounted mobile device, which exchanges languages and/or data with the radio access network, for example, a personal communication service (Personal Communication Service, PCS) phone, a cordless phone, a session initiated protocol (Session Initiated Protocol, SIP) phone, a wireless local loop (Wireless Local Loop, WLL) station, a personal digital assistant (Personal Digital Assistant, PDA) , etc. The wireless terminal device can also be called a system, a subscriber unit (subscriber unit), a subscriber station (subscriber station), a mobile station (mobile station), a mobile (mobile), a remote station (remote station), an access point (access point), a remote terminal (remote terminal), an access terminal (access terminal), a user terminal (user terminal), a user agent (user agent) or a user device (user device), which is not limited in the embodiments of the present disclosure.

The base station involved in the embodiments of the present disclosure may include a plurality of cells providing services for terminals. According to different specific applications, a base station can also be called an access point, or it can be a device in an access network that communicates with wireless terminal device through one or more sectors by the air interface, etc. For example, the base station involved in the embodiments of the present disclosure may be an evolutional Node B (evolutional Node B, eNB or e-NodeB) in a long-term evolution (long-term evolution, LTE) system, a 5G base station (gNB) in a 5G network architecture (next generation system), or a home evolved Node B (Home evolved Node B, HeNB), a relay node (relay node), a home base station (femto), a pico base station (pico), etc., which is not limited in the embodiments. In some network structures, a base station may include a centralized unit (centralized unit, CU) node and a distributed unit (distributed unit, DU) node, where the centralized unit and the distributed unit may also be geographically separated.

Multi Input Multi Output (Multi Input Multi Output, MIMO) transmission can be performed between the base station and the terminal device by using one or more antennas, respectively, and the MIMO transmission can be single user MIMO (Single User MIMO, SU-MIMO) or multiple user MIMO (Multiple User MIMO, MU-MIMO). According to the shape and number of antenna combinations, MIMO transmission can be 2D-MIMO, 3D-MIMO, FD-MIMO or massive-MIMO, and it can also be diversity transmission, precoding transmission or beamforming transmission.

The following introduces the random access procedure.

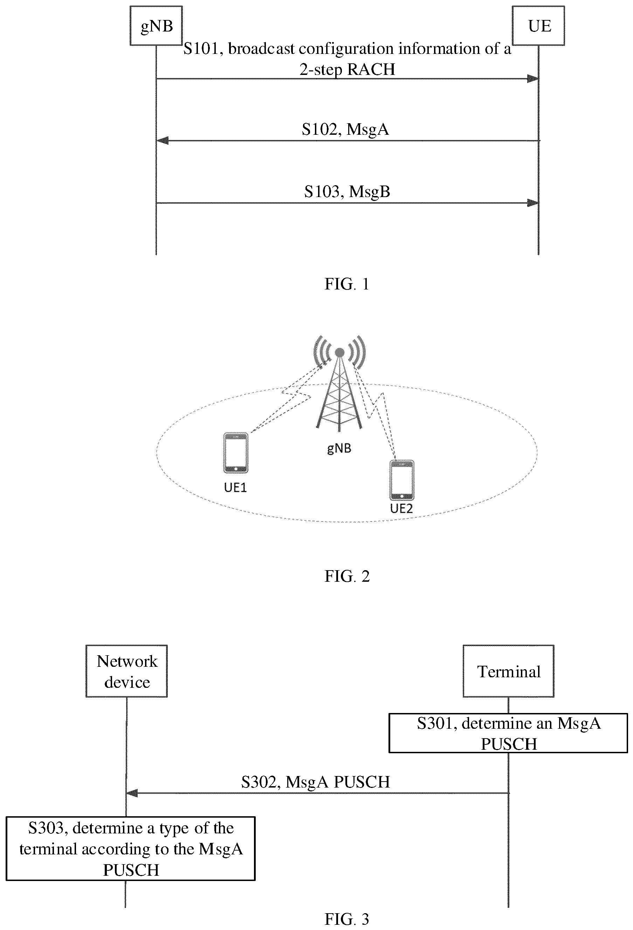

When UE is in an idle state (idle state) or an inactive state (inactive state), it needs to initiate random access to a network device (such as a base station gNB), so as to obtain communication services provided by the network device. The existing 5G NR supports two random access modes. One is 4-step random access, referred to as 4-step RACH, also known as Type 1 random access; and the other is 2-step random access, referred to as 2-step RACH, also known as Type 2 random access. The 2-step RACH will be explained with reference to FIG. 1.

S101: a base station broadcasts and transmits configuration information of a 2-step RACH.

The configuration information of the 2-step RACH indicates a set of random access channel occasion (RACH Occasion, RO) resources and a set of physical uplink shared channel (Physical Uplink Shared Channel, PUSCH) occasion (PUSCH Occasion, PO) resources. In addition, the 2-step RACH configuration information also indicates a mapping relationship between a synchronization signal block (Synchronization Signal Block, SSB) and a RO, and a mapping relationship between the RO and a PO.

S102: a UE transmits a message (MsgA) to a base station according to the 2-step RACH configuration information transmitted by the base station and the selected SSB.

Where the UE transmitting the MsgA includes transmitting a pilot sequence (preamble) in the RO corresponding to the selected SSB (if there are multiple ROs, one of them is randomly selected) and transmitting the PUSCH of MsgA in the PO corresponding to the RO.

S103: the base station transmits a message B (MsgB) to the UE according to a receiving result of MsgA.

In addition, for a UE that supports both 4-step RACH and 2-step RACH, it may initiate both 2-step RACH random access and 4-step RACH random access. The process of 4-step RACH is different from that of 2-step RACH, and the base station needs to determine the subsequent process and the signals to be transmitted/received according to the random access mode initiated by the UE.

At present, NR supports two mechanisms to distinguish between 4-step RACH and 2-step RACH:
(1) distinguishing based on RO;
   in the mechanism of the distinguishing based on RO, the sets of RO resources used by 4-step RACH and 2-step RACH are different, for example, the RO of 4-step RACH and the RO of 2-step RACH have different time-frequency resources. In this case, the base station can distinguish whether the UE initiates 4-step RACH or 2-step RACH only according to the time-frequency resource position of the received preamble;
(2) distinguishing based on the preamble;
   in the mechanism of the distinguishing based on the preamble, the set of RO resources used by 4-step RACH and 2-step RACH is shared, but the available sets of preamble indexes (index) are different between 4-step RACH and 2-step RACH. In this case, the base station can distinguish whether the UE initiates 4-step RACH or the 2-step RACH according to which set the specifically detected preamble index belongs to.

In addition to distinguishing whether the UE initiates 4-step RACH or 2-step RACH, at present, in the 5G NR system, with the technical evolution, a reduced capability UE (Reduced Capability UE, RedCap UE) is proposed. Compared with the ordinary UE (non-RedCap UE), the RedCap UE aims to reduce the complexity and cost of terminal implementation, so the maximum bandwidth supported by the RedCap UE will be smaller than that supported by the ordinary UE. For example, when the carrier frequency is below 6GHz, the maximum bandwidth of the ordinary UE can be 100MHz, while the maximum bandwidth of the RedCap UE is only 20MHz. The minimum number of receiving antennas for the ordinary UE is 4 or 2, while the minimum number of receiving antennas for the RedCap UE is 2 or 1.

No matter which type of UE, it is necessary to initiate random access to the network device to obtain communication services provided by the network device. For example, as shown in FIG. 2, UE1 and UE2 initiate random access requests to the gNB, and the gNB receives the random access requests from various UEs and provides wireless services for them. The gNB interacts and transmits data with UE1 and UE2 through wireless communication. Where the types of UE1 and UE2 may be different.

Due to the different reception capabilities of the ordinary UE and the RedCap UE, the earlier the base station knows/identifies whether the UE initiating random access is the ordinary UE or the RedCap UE, the earlier it can make targeted scheduling, thus improving the resource utilization rate of the network. For example, taking 2-step RACH as an example, if the base station recognizes that the UE that initiates random access currently is the RedCap UE, it can use a lower channel coding rate when scheduling MsgB, thus improving the transmission reliability and making up for the loss of reception capacity of the RedCap UE. However, at present, there is no method to distinguish the RedCap UE from the ordinary UE in the 2-step RACH process.

In order to distinguish between the RedCap UE and the ordinary UE in the process of 2-step RACH, we can consider adopting a similar way to that distinguishes whether the UE initiates 4-step RACH or 2-step RACH, for example, the ordinary UE and the RedCap UE use different ROs, or the ordinary UE and the RedCap UE use different preambles. However, this way will cause the RO resource set or preamble set to be divided into smaller sets. For example, taking the distinguishing of RO as an example, a total RO resource set needs to be divided into four small RO resource sets ({ordinary UE, 4-step RACH}, {RedCap UE, 4-step RACH}, {ordinary UE, 2-step RACH} and {RedCap UE, 2-step RACH}). This segmentation of RO resource sets or preamble sets will cause the capacity of random access to decrease.

Therefore, the embodiments of the present disclosure propose that the base station can identify whether the UE is ordinary UE or RedCap UE through the physical uplink shared channel of a message A (MsgA PUSCH), so as to avoid the segmentation of the RO resource set and the preamble set and ensure the system capacity. The access method provided by the present disclosure will be described in detail below with reference to specific embodiments. It should be understood that the following specific embodiments may be combined with each other, and the same or similar concepts or processes may not be repeated in some embodiments.

FIG. 3 is a schematic flowchart of an access method provided by an embodiment of the present disclosure. As shown in FIG. 3, the method includes:
S301: a terminal determines an MsgA PUSCH;
where different types of terminals correspond to different MsgA PUSCHs;
S302: the terminal transmits the MsgA PUSCH to a network device; and
S303: the network device determines a type of the terminal according to the MsgA PUSCH.

It can be understood that, although not illustrated in FIG. 3, before the terminal determines an MsgA PUSCH, the network device broadcasts and transmits the configuration information of 2-step RACH and transmits a message B to the terminal after determining the type of the terminal. These processes can be referred to the above description of 2-step RACH.

In the embodiments of the present disclosure, there are differences in MsgA PUSCH corresponding to different types of terminals. For example, different types of terminals correspond to different PO resources of MsgA. For example, the PO resources of MsgA corresponding to different types of terminals are the same, but the demodulation reference signal (Demodulation Reference Signal, DMRS) of MsgA PUSCH corresponding to different types of terminals are different. For example, the information carried in MsgA PUSCH corresponding to different types of terminals is different, and the information can indicate the type of terminal. Therefore, the network device can identify the type of the terminal according to the received MsgA PUSCH, so as to facilitate the subsequent targeted scheduling.

The specific types of different types of terminals are not limited in the embodiments of the present disclosure. For example, different types of terminals support different maximum terminal bandwidths and/or different minimum numbers of antennas, such as the aforementioned ordinary UE and the RedCap UE. Alternatively, different types of terminals can also be terminals that are different in other aspects, such as terminals with different service types, such as terminals with small data transmission (Small Data Transmission, SDT) services and terminals with nonsmall data transmission types, or terminals that support random access network service slicing (slicing) and terminals that do not support service slicing. Different types of terminals can also be a combination of the above-mentioned terminals with different bandwidths, numbers of antennas and service types. In the following description, the ordinary UE and the RedCap UE are taken as examples to explain. It can be understood that the method of the embodiment in the present disclosure is equally applicable if the ordinary UE and the RedCap UE are replaced by any different types of first terminals and second terminals.

For example, the PO resources of MsgA corresponding to the ordinary UE and the RedCap UE are different. For example, the PO resources of MsgA corresponding to the ordinary UE and the RedCap UE are the same, but the DMRSs of MsgA PUSCH corresponding to the ordinary UE and the RedCap UE are different. For example, the information carried in the MsgA PUSCH corresponding to the ordinary UE and the RedCap UE is different, and the information can indicate that the terminal is an the ordinary UE or RedCap UE.

The following will be further explained by specific embodiments.

In an implementation, the network device (such as a base station) configures different PO resources for the ordinary UE and the RedCap UE, and the ordinary UE and the RedCap UE have their own dedicated PO. For example, the time domain resources and/or frequency domain resources of the MsgA PUSCH of the ordinary UE and the RedCap UE are different. In addition, the RO resource set and the preamble set configured by the network device for the ordinary UE and the RedCap UE are shared. For example, the network device can broadcast and transmit the shared RO resource indication information, indicating the RO resource set and the preamble set shared by the ordinary UE and the RedCap UE, and also broadcast and transmit the ordinary UE-specific PO resource indication information and the RedCap UE-specific PO resource indication information, which are used for indicating the ordinary UE-specific PO resources and the RedCap UE-specific PO resources, respectively.

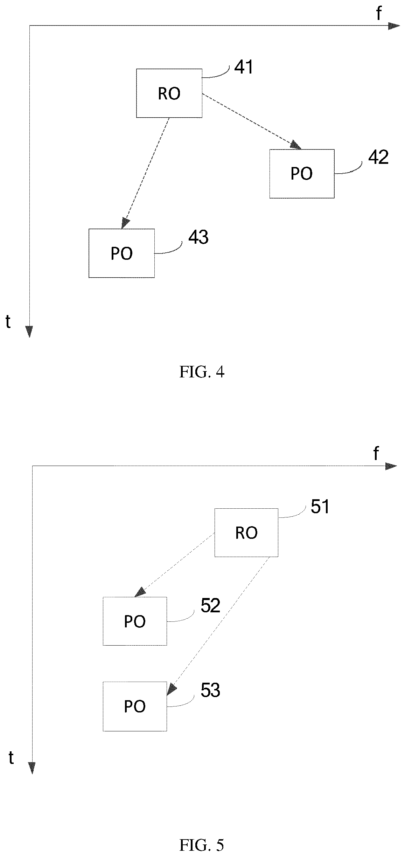

For example, as shown in FIG. 4, the ordinary UE and the RedCap UE share RO resource 41, the ordinary UE uses PO resource 42, and the RedCap UE uses PO resource 43, where the time domain position and frequency domain position of PO resource 42 and PO resource 43 are different.

When transmitting the MsgA, the RedCap UE will transmit the preamble in the shared RO resource 41 and transmit the MsgA PUSCH in the exclusive PO resource 43 of the RedCap UE, and the preamble transmitted by the RedCap UE is selected from the shared preamble set. The ordinary UE will also transmit the preamble in the shared RO resource 41, but will transmit the MsgA PUSCH in the PO resource 42 exclusive to the ordinary UE. The preamble transmitted by the ordinary UE is selected from the shared preamble set.

Accordingly, for a network device that receives or blindly detects the MsgA, if the network device detects the MsgA PUSCH in the PO resource 43 dedicated to the RedCap UE, it can be determined that the RedCap UE initiated random access. If the network device detects the MsgA PUSCH in the PO resource 42 dedicated to the ordinary UE, it can be determined that the ordinary UE initiated the random access. Thus, the identification of the terminal type is realized.

For example, as shown in FIG. 5, the ordinary UE and the RedCap UE share RO resource 51, the ordinary UE uses PO resource 52, and the RedCap UE uses PO resource 53, where the frequency domain positions of PO resource 52 and PO resource 53 are the same, but the time domain positions thereof are different. Similar to that in FIG. 4, the ordinary UE and the RedCap UE each transmits the MsgA PUSCH through dedicated PO resources, and the network device can identify the type of the terminal according to the different time domain positions of the detected MsgA PUSCH.

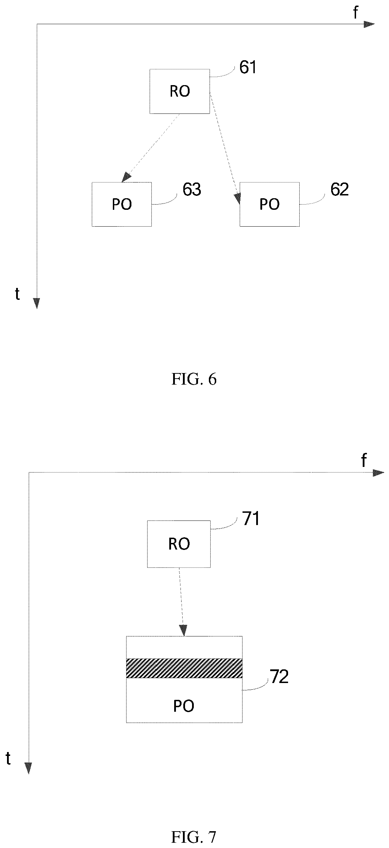

For example, as shown in FIG. 6, the ordinary UE and the RedCap UE share RO resource 61, the ordinary UE uses PO resource 62, and the RedCap UE uses PO resource 63, where the time domain positions of PO resource 62 and PO resource 63 are the same but the frequency domain positions thereof are different. Similar to that in FIG. 4, the ordinary UE and the RedCap UE each transmits the MsgA PUSCH through dedicated PO resources, and the network device can identify the type of the terminal according to the different frequency domain positions of the detected MsgA PUSCH.

Through the method of this embodiment, the network device can identify the RedCap UE and the ordinary UE at the initial access stage of the 2-step RACH, so that the subsequent targeted scheduling can be carried out, and the resource utilization rate is improved. In addition, the RO resource set or the preamble set in this method does not need to be further divided, thus ensuring the system capacity.

In another embodiment, the PO resources configured by the network device for the ordinary UE and the RedCap UE are the same, that is, the time domain and frequency domain resources of the MsgA PUSCH corresponding to the ordinary UE and the RedCap UE are shared. However, the DMRSs of the MsgA PUSCH corresponding to the ordinary UE and the RedCap UE are different, that is, the ordinary UE and the RedCap UE have their own DMRS. For example, the network device can broadcast and transmit the shared PO resource indication information to indicate the PO time-frequency resources shared by the ordinary UE and the RedCap UE, and also broadcast and transmit the DMRS configuration information dedicated to the ordinary UE and the DMRS configuration information dedicated to the RedCap UE, which are used for indicating the DMRS of the ordinary UE and the DMRS dedicated to the RedCap UE, respectively. In addition, the RO resource set and the preamble set configured by the network device for the ordinary UE and the RedCap UE are still shared.

For example, as shown in FIG. 7, the ordinary UE and the RedCap UE share RO resource 71, and the ordinary UE and the RedCap UE share PO resource 72. However, the DMRSs of the MsgA PUSCH of the ordinary UE and the RedCap UE are different. In FIG. 7, the DMRS of the MsgA PUSCH is indicated by shading, including the DMRS of the MsgA PUSCH of the ordinary UE and the DMRS of the MsgA PUSCH of the RedCap UE.

When transmitting the MsgA, the RedCap UE will transmit the shared preamble in the shared RO resource 71 and the MsgA PUSCH in the shared PO resource 72, but only the DMRS dedicated to the RedCap UE is used in the MsgA PUSCH. The ordinary UE will also transmit the shared preamble in the shared RO resource 71 and the MsgA PUSCH in the shared PO resource 72, but only the DMRS dedicated to the ordinary UE is used in the MsgA PUSCH.

The DMRSs of the MsgA PUSCH corresponding to the ordinary UE and the RedCap UE are different, which may mean that the ports of the DMRSs are different, the sequences of the DMRSs are different, or both the ports and the sequences of the DMRS are different.

For the DMRS ports, different DMRS ports are defined in NR, and different DMRS ports occupy different time-frequency resources and/or masks. A network device can determine the DMRS port used by UE according to the blind detection of DMRS of the MsgA PUSCH, so that different types of UE can be distinguished.

For DMRS sequences, the DMRS of PUSCH in NR uses a pseudo-random sequence or a ZC (Zadoff-chu) sequence. Whether it is a pseudo-random sequence or a ZC sequence, a specific value of a sequence is determined by the initial phase C_init, which in turn is determined by the scrambling code. There are at most two scrambling ID (scrambling ID) of the DMRS of the MsgA PUSCH, namely msgA-ScramblingID0 (N_ID^0) and msgA-ScramblingID1 (N_ID^1). Therefore, the RedCap UE and the ordinary UE can use different scrambling ID, so that the DMRS sequences of the RedCap UE and the ordinary UE are different. Accordingly, the network device can determine the DMRS sequence used by the UE according to the blind detection of the DMRS of the MsgA PUSCH, so that different types of UE can be distinguished.

In an implementation, the scrambling code configuration information used by the RedCap UE is different from that used by the ordinary UE, for example, the scrambling code ID used by the RedCap UE is msgA-ScramblingIDO-RedCap (N_(ID, RedCap)^0) and msgA-ScramblingID1-RedCap (N_(ID, RedCap)^1), which is different from that used by the ordinary UE.

In another implementation, the RedCap UE and the ordinary UE share scrambling code configuration information, but the RedCap UE and the ordinary UE only use one of msgA-ScramblingID0 (N_ID^0) and msgA-ScramblingID1 (N_ID^1), respectively. For example, the ordinary UE uses msgA-ScramblingID0 (N_ID^0), while the RedCap UE uses msgA-ScramblingID1 (N_ID^1).

Through the method of this embodiment, the network device can identify the RedCap UE and the ordinary UE at the initial access stage of the 2-step RACH, so that the subsequent targeted scheduling can be carried out, and the resource utilization rate can be improved. In addition, in this method, the RO resource set or the preamble set does not need to be further divided, and the PO resource set also does not need to be further divided, thus ensuring the system capacity.

In yet another embodiment, the RO resource set, the preamble set, the PO resource set and the DMRS configured by the network device for the ordinary UE and the RedCap UE are all shared. However, the information carried in the MsgA PUSCH corresponding to the ordinary UE and the RedCap UE is different, and this information can indicate that the terminal is the ordinary UE or the RedCap UE, which can be called terminal type indication information, that is, the UE actively reports its type to the network device through the terminal type indication information carried by the MsgA PUSCH. Accordingly, after demodulating the MsgA PUSCH, the network device can determine the type of UE according to the terminal type indication information in the MsgA PUSCH.

In an implementation, the UE carries terminal type indication information through RRCSetupRequest (RRCSetupRequest) in the MsgA PUSCH. The following is the definition of RRCSetupRequest in the prior art:

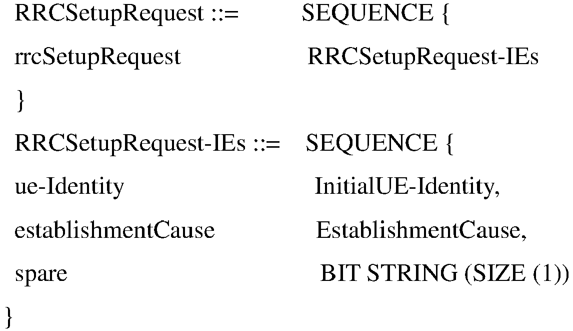

At present, the RRCSetupRequest includes RRCSetupRequest-IEs, while the RRCSetupRequest-IEs include ue-Identity, establishmentCause and an unused spare bit. Thus, there are three ways to carry the terminal type indication information in the RRCSetupRequest:
1. using the spare bit in the RRCSetupRequest-IEs for indication. For example, this bit is defined as the IE of the ue-Type, and its value of 0 or 1 indicates that the UE is ordinary UE or RedCap UE, respectively;
2. adding an IE in the RRCSetupRequest, such as an IE named ue-Type, which includes at least 1 bit to indicate whether the UE is ordinary UE or RedCap UE.
3. adding an IE in the RRCSetupRequest-IEs, such as an IE named ue-Type, which includes at least 1 bit to indicate whether the UE is ordinary UE or RedCap UE.

In another implementation, the UE carries the terminal type indication information through other parts besides the RRCSetupRequest in the MsgA PUSCH. For example, besides the RRCSetupRequest information, the MsgA PUSCH may also include a MAC Control Element (MAC Control Element, MAC CE), which includes at least 1 bit to indicate the type of the UE. Alternatively, the MsgA PUSCH may include any other predefined format cell besides the RRCSetupRequest information, as long as the cell includes at least 1 bit to indicate the type of the UE.

Through the method provided by this embodiment, the network device can identify the the RedCap UE and the ordinary UE at the initial access stage of the 2-step RACH, so that the subsequent targeted scheduling can be carried out, and the resource utilization rate is improved. In addition, the RO resource set or the preamble set in this method does not need to be further divided, and the PO resource set does not need to be further divided, thus ensuring the system capacity.

An embodiment of the present disclosure may also provide an information processing method, which includes:
determining, by a terminal, a first PUSCH, where the first PUSCH is used for transmitting an MsgA, where the first PUSCHs corresponding to different types of terminals are different;
transmitting, by the terminal, a first PUSCH to a network device;
receiving, by the network device, the first PUSCH transmitted by the terminal, and determining a type of the terminal according to the first PUSCH.

In an implementation, the determining, by the terminal, the first physical uplink shared channel PUSCH includes:
determining terminal type indication information, where the terminal type indication information is used for indicating the type of the terminal;
carrying the terminal type indication information in the first PUSCH.

In an implementation, the determining, by the network device, the type of the terminal according to the first PUSCH includes:
determining a type of the terminal according to the terminal type indication information carried in the first PUSCH.

In an implementation, the type of the terminal includes one or more of a RedCap low-capacity terminal type and a non-low-capacity terminal type.

In an implementation, the first PUSCH is an MsgA PUSCH.

The implementation principle and beneficial effects of this embodiment can be referred to the previous embodiments, and will not be described here.

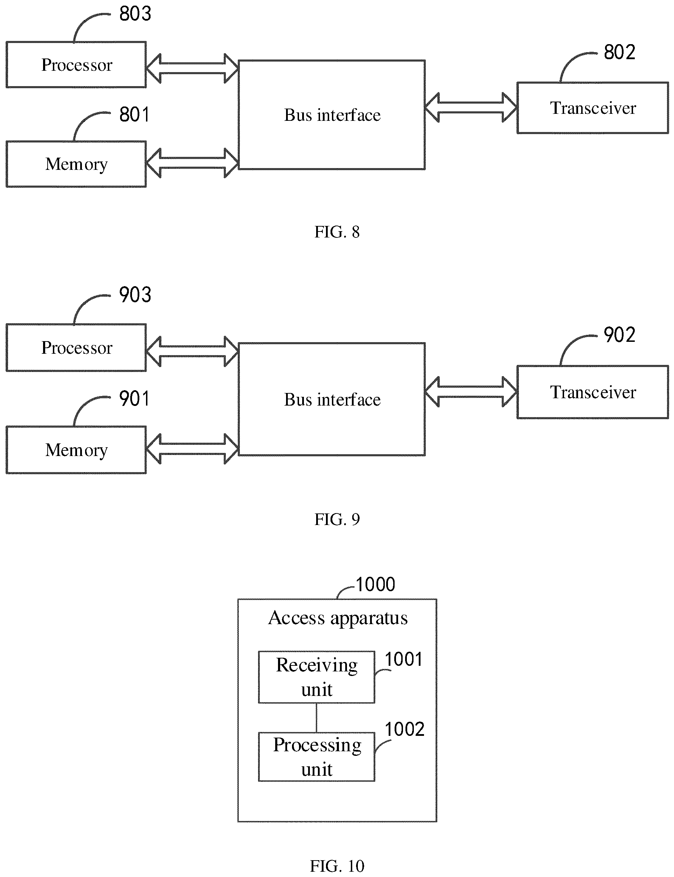

FIG. 8 is a schematic structural diagram I of an access apparatus provided by an embodiment of the present disclosure. As shown in FIG. 8, the access apparatus includes a memory 801, a transceiver 802 and a processor 803, where:
the memory 801 is configured to store a computer program;
the transceiver 802 is configured to receive and transmit data under control of the processor; and
the processor 803 is configured to read the computer program stored in the memory and perform the following operations:
   receiving a physical uplink shared channel of a message A transmitted by a terminal;
   determining a type of the terminal according to the physical uplink shared channel of the message A.

In an implementation, the resources of the physical uplink shared channel occasion of the message A corresponding to different types of terminals are different.

In an implementation, the time domain resources and/or frequency domain resources of the physical uplink shared channels of the message A corresponding to different types of terminals are different.

In an implementation, the resources of the physical uplink shared channel occasion of the message A corresponding to different types of terminals are the same, and the demodulation reference signals of the physical uplink shared channels of message A corresponding to different types of terminals are different.

In an implementation, the ports and/or sequences of demodulation reference signals of the physical uplink shared channels of the message A corresponding to different types of terminals are different.

In an implementation, the processor 803 is configured to perform the following operations:
determining the type of the terminal according to terminal type indication information in the physical uplink shared channel of the message A.

In an implementation, different types of terminals support different maximum terminal bandwidths and/or different minimum numbers of antennas.

It should be noted that, the foregoing apparatus provided by the present disclosure can implement all method steps implemented by the network device in the foregoing method embodiments, and can achieve the same technical effects. The parts and beneficial effects of this embodiment that are the same as those of the method embodiments are not described here again.

FIG. 9 is a schematic structural diagram II of an access apparatus provided by an embodiment of the present disclosure. As shown in FIG. 9, the access apparatus includes a memory 901, a transceiver 902 and a processor 903, where:
the memory 901 is configured to store a computer program;
the transceiver 902 is configured to receive and transmit data under control of the processor; and
the processor 903 is configured to read the computer program stored in the memory and perform the following operations:
   determining a physical uplink shared channel of a message A;
   transmitting a physical uplink shared channel of the message A to a network device, where the physical uplink shared channels of the message A corresponding to different types of terminals are different.

In an implementation, resources of physical uplink shared channel occasion of the message A corresponding to different types of terminals are different.

In an implementation, time domain resources and/or frequency domain resources of the physical uplink shared channels of the message A corresponding to different types of terminals are different.

In an implementation, resources of physical uplink shared channel occasion of the message A corresponding to different types of terminals are the same, and demodulation reference signals of the physical uplink shared channels of the message A corresponding to different types of terminals are different.

In an implementation, ports and/or sequences of demodulation reference signals of the physical uplink shared channels of the message A corresponding to different types of terminals are different.

In an implementation, the physical uplink shared channel of the message A includes terminal type indication information, where the terminal type indication information is used for indicating the type of the terminal.

In an implementation, different types of terminals support different maximum terminal bandwidths and/or different minimum numbers of antennas.

It should be noted that, the foregoing apparatus provided by the present disclosure can implement all method steps implemented by the terminal in the foregoing method embodiments, and can achieve the same technical effects. The parts and beneficial effects of this embodiment that are the same as those of the method embodiments are not described here again.

An embodiment of the present disclosure provides an information processing apparatus, including a memory, a transceiver and a processor, where:
the memory is configured to store a computer program;
the transceiver is configured to receive and transmit data under control of the processor; and
the processor is configured to read the computer program stored in the memory and perform the following operations:
   determining a first physical uplink shared channel PUSCH, where the first PUSCH is used for transmitting a message A;
   transmitting the first PUSCH to a network device, where first PUSCHs corresponding to different types of terminals are different.

In an implementation, the processor is configured to perform the following operations:
determining terminal type indication information, where the terminal type indication information is used for indicating the type of the terminal;
carrying the terminal type indication information in the first physical uplink shared channel PUSCH.

In an implementation, the type of the terminal includes one or more of a RedCap low-capacity terminal type and a non-low-capacity terminal type.

It should be noted that, the foregoing apparatus provided by the present disclosure can implement all method steps implemented by the terminal in the foregoing method embodiments, and can achieve the same technical effects. The parts and beneficial effects of this embodiment that are the same as those of the method embodiments are not described here again.

An embodiment of the application provides an information processing apparatus, which includes a memory, a transceiver and a processor, where:
the memory is configured to store a computer program;
the transceiver is configured to receive and transmit data under control of the processor; and
the processor is configured to read the computer program stored in the memory and perform the following operations:
   receiving a first physical uplink shared channel PUSCH transmitted by a terminal, where the first PUSCH is used for transmitting a message A;
   determining a type of the terminal according to the first PUSCH.

In an implementation, the processor is configured to perform the following operation:
determining the type of the terminal according to terminal type indication information carried in the first PUSCH.

It should be noted that, the foregoing apparatus provided by the present disclosure can implement all method steps implemented by the network device in the foregoing method embodiments, and can achieve the same technical effects. The parts and beneficial effects of this embodiment that are the same as those of the method embodiments are not described here again.

FIG. 10 is a schematic structural diagram III of an access apparatus provided by an embodiment of the present disclosure. As shown in FIG. 10, the access apparatus 1000 includes:
a receiving unit 1001, configured to receive a physical uplink shared channel of a message A transmitted by a terminal;
a processing unit 1002, configured to determine a type of the terminal according to the physical uplink shared channel of the message A.

In an implementation, resources of physical uplink shared channel occasion of the message A corresponding to different types of terminals are different.

In an implementation, time domain resources and/or frequency domain resources of the physical uplink shared channels of the message A corresponding to different types of terminals are different.

In an implementation, resources of physical uplink shared channel occasion of the message A corresponding to different types of terminals are the same, and demodulation reference signals of the physical uplink shared channels of the message A corresponding to different types of terminals are different.

In an implementation, ports and/or sequences of demodulation reference signals of the physical uplink shared channels of the message A corresponding to different types of terminals are different.

In an implementation, the processing unit 1002 is configured to:
determine a type of the terminal according to terminal type indication information in the physical uplink shared channel of the message A.

In an implementation, different types of terminals support different maximum terminal bandwidths and/or different minimum numbers of antennas.

It should be noted that, the foregoing apparatus provided by the present disclosure can implement all method steps implemented by the network device in the foregoing method embodiments, and can achieve the same technical effects. The parts and beneficial effects of this embodiment that are the same as those of the method embodiments are not described here again.

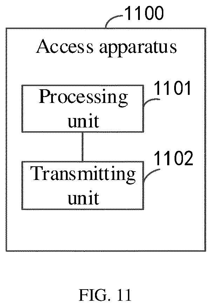

FIG. 11 is a schematic structural diagram of an access apparatus provided by an embodiment of the present disclosure. As shown in FIG. 11, the access apparatus 1100 includes:
a processing unit 1101, configured to determine a physical uplink shared channel of a message A;
a transmitting unit 1102, configured to transmit a physical uplink shared channel of the message A to a network device, where the physical uplink shared channels of the message A corresponding to different types of terminals are different.

In an implementation, resources of physical uplink shared channel occasion of the message A corresponding to different types of terminals are different.

In an implementation, time domain resources and/or frequency domain resources of the physical uplink shared channels of the message A corresponding to different types of terminals are different.

In an implementation, resources of physical uplink shared channel occasion of the message A corresponding to different types of terminals are the same, and demodulation reference signals of the physical uplink shared channels of the message A corresponding to different types of terminals are different.

In an implementation, ports and/or sequences of demodulation reference signals of the physical uplink shared channels of the message A corresponding to different types of terminals are different.

In an implementation, the physical uplink shared channel of the message A includes terminal type indication information, where the terminal type indication information is used for indicating the type of the terminal.

In an implementation, different types of terminals support different maximum terminal bandwidths and/or different minimum numbers of antennas.

It should be noted that, the foregoing apparatus provided by the present disclosure can implement all method steps implemented by the terminal in the foregoing method embodiments, and can achieve the same technical effects. The parts and beneficial effects of this embodiment that are the same as those of the method embodiments are not described here again.

An embodiment of the present disclosure provides an information processing apparatus, including:
a determining module, configured to determine a first physical uplink shared channel PUSCH, where the first PUSCH is used for transmitting a message A;
a transmitting module, configured to transmit the first PUSCH to a network device, where first PUSCHs corresponding to different types of terminals are different.

In an implementation, the determining module is configured to:
determine terminal type indication information, where the terminal type indication information is used for indicating the type of the terminal;
carry the terminal type indication information in the first physical uplink shared channel PUSCH.

In an implementation, the type of the terminal includes one or more of a RedCap low-capacity terminal type and a non-low-capacity terminal type.

It should be noted that, the foregoing apparatus provided by the present disclosure can implement all method steps implemented by the network device in the foregoing method embodiments, and can achieve the same technical effects. The parts and beneficial effects of this embodiment that are the same as those of the method embodiments are not described here again.

An embodiment of the present disclosure provides an information processing apparatus, including:
a receiving module, configured to receive a first physical uplink shared channel PUSCH transmitted by a terminal, where the first PUSCH is used for transmitting a message A;
a determining module, configured to determine a type of the terminal according to the first PUSCH.

In an implementation, the determining module is configured to:
determine the type of the terminal according to terminal type indication information carried in the first PUSCH.

It should be noted that, the foregoing apparatus provided by the present disclosure can implement all method steps implemented by the network device in the foregoing method embodiments, and can achieve the same technical effects. The parts and beneficial effects of this embodiment that are the same as those of the method embodiments are not described here again.

It should be noted that division of the units in the embodiments of the present disclosure is schematic, which is merely logical function division and may be other division in actual implementations. In addition, various functional units in the embodiments of the present disclosure may be integrated into one processing unit, or each of the units may exist separately, or two or more units are integrated into one unit. The integrated unit may be implemented in a form of hardware, and may also be implemented in a form of a software functional unit.

If the integrated unit is implemented in the form of the software functional unit and sold or used as an independent product, the integrated unit may be stored in a processor-readable storage medium. Based on such understanding, a technical solution of the present disclosure essentially, or the part contributing to the prior art, or all or a part of the technical solution may be implemented in a form of a software product. The computer software product is stored in a storage medium and includes several instructions for causing a computer device (which may be a personal computer, a server, or a network device, etc.) or a processor (processor) to execute all or part of the steps of the methods described in the embodiments of the present disclosure. The foregoing storage medium includes: any medium that can store program codes, such as a USB flash disk, a mobile hard disk, a read-only memory (Read-Only Memory, ROM), a random access memory (Random Access Memory, RAM), a magnetic disk, or an optical disk, etc.

An embodiment of the present disclosure also provide a computer-readable storage medium, where the computer-readable storage medium stores a computer program which is used to cause a computer to perform the method executed by the network device or the terminal in the foregoing method embodiments.

The computer-readable storage medium may be any available medium or data storage device that the computer can access, including but not limited to a magnetic memory (such as a floppy disk, a hard disk, a magnetic tape, a magneto-optical disk (MO), etc.), an optical memory (such as a CD, a DVD, a BD, an HVD, etc.), and a semiconductor memory (such as a ROM, an EPROM, an EEPROM, a non-volatile memory (NAND FLASH), a solid state disk (SSD)), etc.

An embodiment of the present disclosure also provides a computer program product including a computer program which, when executed by a processor, performs the method executed by the network device or the terminal in the foregoing method embodiments.

A person skilled in the art shall understand that, the embodiments of the present disclosure can be provided as a method, a system or a computer program product. Therefore, the present disclosure may adopt the form of an entirely hardware embodiment, an entirely software embodiment or an embodiment combining software and hardware. Furthermore, the present disclosure may adopt the form of a computer program product implemented on one or more computer-usable storage media (including but not limited to a disk memory, an optical memory, and the like) containing computer-usable program codes.

The present disclosure is described with reference to the flowcharts and/or block diagrams of the methods, the devices (systems) and the computer program products according to the embodiments of the present disclosure. It should be understood that, each flowchart and/or block in the flowcharts and/or block diagrams and combinations of flows and/or blocks in the flowcharts and/or block diagrams can be implemented by computer-executable instructions. The computer-executable instructions may be provided to a processor of a general-purpose computer, a special-purpose computer, an embedded processor or other programmable data processing devices to produce a machine, which enables instructions executed by a processor of a computer or other programmable data processing devices to generate an apparatus for implementing functions specified in one or more processes in the flowcharts and/or one or more blocks in the block diagrams.

These processor-executable instructions may also be stored in a processor-readable memory that can direct a computer or other programmable data processing devices to operate in a particular manner, so that the instructions stored in the processor-readable memory generate an article of manufacture including an instruction apparatus. The instruction apparatus implements functions specified in one or more processes in the flowcharts and/or one or more blocks in the block diagrams.

These processor-executable instructions may also be loaded into a computer or other programmable data processing devices, so that a series of operational steps are performed on the computer or other programmable devices to generate computer-implemented processing. Thus, the instructions executed on the computer or other programmable devices provide steps for implementing the functions specified in one or more processes in the flowcharts and/or one or more blocks in the block diagrams.

Obviously, a person skilled in the art can make various modifications and variations to the present disclosure without departing from the spirit and scope of the present disclosure. As such, if these modifications and variations of the present disclosure belong to the scope of the claims of the present disclosure and their equivalents, the present disclosure is intended to include these modifications and variations.

## Claims

1. An information processing method, comprising:
determining a first physical uplink shared channel PUSCH, wherein the first PUSCH is used for transmitting a message A;
transmitting the first PUSCH to a network device, wherein the first PUSCHs corresponding to different types of terminals are different.

2. The method according to claim 1, wherein the determining the first physical uplink shared channel PUSCH comprises:
determining terminal type indication information, wherein the terminal type indication information is used for indicating the type of the terminal;
carrying the terminal type indication information in the first physical uplink shared channel PUSCH.

3. The method according to claim 1 or 2, wherein the type of the terminal comprises one or more of a RedCap low-capacity terminal type and a non-low-capacity terminal type.

4. An information processing method, comprising:
receiving a first physical uplink shared channel PUSCH transmitted by a terminal, wherein the first PUSCH is used for transmitting a message A;
determining a type of the terminal according to the first PUSCH.

5. The method according to claim 4, wherein the determining the type of the terminal according to the first PUSCH comprises:
determining the type of the terminal according to terminal type indication information carried in the first PUSCH.

6. An access method, comprising:
receiving a physical uplink shared channel of a message A transmitted by a terminal;
determining a type of the terminal according to the physical uplink shared channel of the message A.

7. The method according to claim 6, wherein the determining the type of the terminal according to the physical uplink shared channel of the message A comprises:
determining the type of the terminal according to terminal type indication information in the physical uplink shared channel of the message A.

8. The method according to claim 6 or 7, wherein different types of terminals support different maximum terminal bandwidths and/or different minimum numbers of antennas.

9. An access method, comprising:
determining a physical uplink shared channel of a message A;
transmitting the physical uplink shared channel of the message A to a network device, wherein the physical uplink shared channels of the message A corresponding to different types of terminals are different.

10. The method according to claim 6 or 9, wherein resources of physical uplink shared channel occasion of the message A corresponding to different types of terminals are different.

11. The method according to claim 10, wherein time domain resources and/or frequency domain resources of the physical uplink shared channels of the message A corresponding to different types of terminals are different.

12. The method according to claim 6 or 9, wherein resources of physical uplink shared channel occasion of the message A corresponding to different types of terminals are the same, and demodulation reference signals of the physical uplink shared channels of the message A corresponding to different types of terminals are different.

13. The method according to claim 12, wherein ports and/or sequences of demodulation reference signals of the physical uplink shared channels of the message A corresponding to different types of terminals are different.

14. The method according to claim 6 or 9, wherein the physical uplink shared channel of the message A comprises terminal type indication information, wherein the terminal type indication information is used for indicating the type of the terminal.

15. The method according to any one of claim 6 or 9, wherein different types of terminals support different maximum terminal bandwidths and/or different minimum numbers of antennas.

16. An information processing apparatus, comprising a memory, a transceiver and a processor,
wherein the memory is configured to store a computer program;
the transceiver is configured to receive and transmit data under control of the processor;
the processor is configured to read the computer program stored in the memory and perform the following operations:
determining a first physical uplink shared channel PUSCH, wherein the first PUSCH is used for transmitting a message A;
transmitting the first PUSCH to a network device, wherein the first PUSCHs corresponding to different types of terminals are different.

17. The apparatus according to claim 16, wherein the processor is configured to perform the following operations:
determining terminal type indication information, wherein the terminal type indication information is used for indicating the type of the terminal;
carrying the terminal type indication information in the first physical uplink shared channel PUSCH.

18. The apparatus according to claim 16 or 17, wherein the type of the terminal comprises one or more of a RedCap low-capacity terminal type and a non-low-capacity terminal type.

19. An information processing apparatus, comprising a memory, a transceiver and a processor,
wherein the memory is configured to store a computer program;
the transceiver is configured to receive and transmit data under control of the processor;
the processor is configured to read the computer program stored in the memory and perform the following operations:
receiving a first physical uplink shared channel PUSCH transmitted by a terminal, wherein the first PUSCH is used for transmitting a message A;
determining a type of the terminal according to the first PUSCH.

20. The apparatus according to claim 19, wherein the processor is configured to the following operation:
determining the type of the terminal according to terminal type indication information carried in the first PUSCH.

21. An access apparatus, comprising a memory, a transceiver and a processor,
wherein the memory is configured to store a computer program;
the transceiver is configured to receive and transmit data under control of the processor;
the processor is configured to read the computer program stored in the memory and perform the following operations:
receiving a physical uplink shared channel of a message A transmitted by a terminal;
determining a type of the terminal according to the physical uplink shared channel of the message A.

22. The apparatus according to claim 21, wherein the processor is specifically configured to perform the following operation:
determining the type of the terminal according to terminal type indication information in the physical uplink shared channel of the message A.

23. The apparatus according to claim 20 or 21, wherein different types of terminals support different maximum terminal bandwidths and/or different minimum numbers of antennas.

24. An access apparatus, comprising a memory, a transceiver and a processor,
wherein the memory is configured to store a computer program;
the transceiver is configured to receive and transmit data under control of the processor;
the processor is configured to read the computer program stored in the memory and perform the following operations:
determining a physical uplink shared channel of a message A;
transmitting a physical uplink shared channel of the message A to a network device, wherein the physical uplink shared channels of the message A corresponding to different types of terminals are different.

25. The apparatus according to claim 21 or 24, wherein resources of physical uplink shared channel occasion of the message A corresponding to different types of terminals are different.

26. The apparatus according to claim 25, wherein time domain resources and/or frequency domain resources of the physical uplink shared channels of the message A corresponding to different types of terminals are different.

27. The apparatus according to claim 21 or 24, wherein resources of physical uplink shared channel occasion of the message A corresponding to different types of terminals are the same, and demodulation reference signals of the physical uplink shared channels of the message A corresponding to different types of terminals are different.

28. The apparatus according to claim 27, wherein ports and/or sequences of demodulation reference signals of the physical uplink shared channels of the message A corresponding to different types of terminals are different.

29. The apparatus according to claim 21 or 24, wherein the physical uplink shared channel of the message A comprises terminal type indication information, wherein the terminal type indication information is used for indicating the type of the terminal.

30. The apparatus according to claim 21 or 24, wherein different types of terminals support different maximum terminal bandwidths and/or different minimum numbers of antennas.

31. An information processing apparatus, comprising:
a determining module, configured to determine a first physical uplink shared channel PUSCH, wherein the first PUSCH is used for transmitting a message A;
a transmitting module, configured to transmit the first PUSCH to a network device, wherein the first PUSCHs corresponding to different types of terminals are different.

32. The apparatus according to claim 31, wherein the determining module is configured to:
determine terminal type indication information, wherein the terminal type indication information is used for indicating the type of the terminal;
carry the terminal type indication information in the first physical uplink shared channel PUSCH.

33. The apparatus according to claim 31 or 32, wherein the type of the terminal comprises one or more of a RedCap low-capacity terminal type and a non-low-capacity terminal type.

34. An information processing apparatus, comprising:
a receiving module, configured to receive a first physical uplink shared channel PUSCH transmitted by a terminal, wherein the first PUSCH is used for transmitting a message A;
a determining module, configured to determine a type of the terminal according to the first PUSCH.

35. The apparatus according to claim 34, wherein the determining module is configured to:
determine the type of the terminal according to terminal type indication information carried in the first PUSCH.

36. An access apparatus, comprising:
a receiving unit, configured to receive a physical uplink shared channel of a message A transmitted by a terminal;
a processing unit, configured to determine a type of the terminal according to the physical uplink shared channel of the message A.

37. The apparatus according to claim 36, wherein the processing unit is configured to:
determine the type of the terminal according to terminal type indication information in the physical uplink shared channel of the message A.

38. The apparatus according to claim 36 or 37, wherein different types of terminals support different maximum terminal bandwidths and/or different minimum numbers of antennas.

39. An access apparatus, comprising:
a processing unit, configured to determine a physical uplink shared channel of a message A;
a transmitting unit, configured to transmit a physical uplink shared channel of the message A to a network device, wherein the physical uplink shared channels of the message A corresponding to different types of terminals are different.

40. The apparatus according to claim 36 or 39, wherein resources of physical uplink shared channel occasion of the message A corresponding to different types of terminals are different.

41. The apparatus according to claim 40, wherein time domain resources and/or frequency domain resources of the physical uplink shared channels of the message A corresponding to different types of terminals are different.

42. The apparatus according to claim 36 or 39, wherein resources of physical uplink shared channel occasion of the message A corresponding to different types of terminals are the same, and demodulation reference signals of the physical uplink shared channels of the message A corresponding to different types of terminals are different.

43. The apparatus according to claim 42, wherein ports and/or sequences of demodulation reference signals of the physical uplink shared channels of the message A corresponding to different types of terminals are different.

44. The apparatus according to claim 36 or 39, wherein the physical uplink shared channel of the message A comprises terminal type indication information, wherein the terminal type indication information is used for indicating the type of the terminal.

45. The apparatus according to claim 36 or 39, wherein different types of terminals support different maximum terminal bandwidths and/or different minimum numbers of antennas.

46. A computer-readable storage medium, wherein the computer-readable storage medium stores a computer program for causing a computer to execute the method according to any one of claims 1 to 15.

47. A computer program product, wherein the computer program product comprises a computer program which, when executed by a computer or a processor, implements the method according to any one of claims 1 to 15.
